# EUROPEAN PATENT APPLICATION

(11) **EP 2 012 448 A2**
(43) Date of publication of application: **07.01.2009**
(21) Application number: 08159320.4
(22) Date of filing: 30.06.2008
(51) Int. Cl.: H04H 20/24, H04H 60/12

(54) **Broadcast System and Broadcast Reception Method and Apparatus Thereof**

(30) Priority: 03.07.2007 KR 20070066790
(71) Applicant: Samsung Electronics Co., Ltd., Suwon-si, Gyeonggi-Do (KR)
(72) Inventor: Lee, Jong Kerl, Yeongtong-gu, Suwon-si, Gyeonggi-do (KR); Kang, Jae Sung, Yeongtong-gu, Suwon-si, Gyeonggi-do (KR)
(74) Representative: Harrison Goddard Foote

(57) **Abstract**

A broadcast playback method includes receiving a first format of a broadcast stream transmitted by a broadcast station over a first radio network, playing the first format of the broadcast stream through demodulation and decoding processes, receiving a second format of the broadcast stream over a second radio network when the first radio network is unavailable, and playing the second format of the broadcast stream.

## Description

### BACKGROUND OF THE INVENTION

FIELD OF THE INVENTION

The present invention relates to a digital broadcast system and, in particular, to a broadcast playback method and apparatus that may provide improved broadcast service reliability by transmitting broadcast data over an existing mobile communication network as well as a dedicated broadcast network.

DISCUSSION OF THE BACKGROUND

Mobile phones are one of the most popular and one of the most technically advanced electronic devices in the world. Mobile phones may be equipped with various functions such as audio playback, video playback, broadcast playback, and camera functions.

Broadcast-enabled mobile phones allow users to watch broadcast TV on the move. Typically, a broadcast-enabled mobile phone is equipped with a broadcast receiver unit to receive and process the broadcast signal. Accordingly, the broadcast-enabled mobile phone is provided with two radio signal processing modules including a broadcast receiver unit to process the broadcast signal and a mobile communication module to process a wireless communication signal.

However, receiving a broadcast signal is limited due to insufficient broadcast network equipment and frequency characteristics such that the user may experience a gap in the broadcast. This may cause user inconvenience and decrease the quality of the mobile broadcast system.

### SUMMARY OF THE INVENTION

The present invention provides a broadcast playback method and apparatus that may provide improved broadcast service reliability using a backup network such as mobile communication network in addition to the broadcast network, which may result in seamless broadcast service.

Additional features of the invention will be set forth in the description which follows, and in part will be apparent from the description, or may be learned by practice of the invention.

The present invention discloses a broadcast playback method including receiving a first format of a broadcast stream transmitted by a broadcast station over a first radio network, playing the first format of the broadcast stream through demodulation and decoding processes, receiving a second format of the broadcast stream over a second radio network when the first radio network is unavailable, and playing the second format of the broadcast stream.

The present invention also discloses a broadcast playback apparatus including a first radio unit to receive a first format of a broadcast stream received over a first radio network and reproduce broadcast data by demodulating and decoding the first format, a second radio unit to receive a second format of the broadcast stream through a second radio network when the first radio network is unavailable and to reproduce the broadcast data by demodulating and decoding the second format, and a control unit to control reception of the first and second formats of the broadcast stream and reproduction of the broadcast data.

The present invention also discloses a broadcast system including a transmitter to transmit broadcast data in a first format and a second format, at least one receiver to receive the broadcast data in at least one of the first and second formats, a first radio network to deliver the broadcast data to the receiver in the first format, and a second radio network to deliver the broadcast data to the receiver in the second format.

It is to be understood that both the foregoing general description and the following detailed description are exemplary and explanatory and are intended to provide further explanation of the invention as claimed.

### DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic diagram showing a broadcast system according to an exemplary embodiment of the present invention.

FIG. 2 is a block diagram showing a configuration of the broadcast station of FIG. 1.

FIG. 3 is a block diagram showing a configuration of a mobile terminal of FIG. 1.

FIG. 4 is a timing diagram showing an operation of the mobile terminal of FIG. 3.

FIG. 5 is a diagram showing steps of a broadcast data display procedure of a broadcast playback method according to an exemplary embodiment of the present invention.

FIG. 6 is a diagram showing steps of a broadcast data display procedure of the broadcast playback method according to another exemplary embodiment of the present invention.

FIG. 7 is a flowchart showing a broadcast playback method according to an exemplary embodiment of the present invention.

FIG. 8 is a flowchart showing a broadcast playback method according to another exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. Like reference numerals in the drawings denote like elements.

The terms and phrases used in the specification and appended claims are provided to enable a clear and consistent understanding of the detailed description and the claims. Unless otherwise noted, the terms and phrases are to be understood according to conventional usage by those skilled in the relevant art.

In the following, the broadcast playback method and apparatus is described in association with a Digital Video Broadcasting-Handheld (DVB-H) system. However, the present invention is not limited to a DVB-H system. For example, the broadcast playback method and apparatus may be applied to other types of broadcast systems such as Digital Multimedia Broadcasting (DMB) and MediaFLO. The broadcast playback method of the present invention is a hybrid technology combining a dedicated broadcast network and an existing mobile communication network, which may improve broadcast service quality.

In the following, the term "broadcast data" is used to describe program data produced by a broadcast station, and the term "broadcast signal" is used to describe a radio signal obtained by processing broadcast data broadcasted in the air according to a broadcast standard. Accordingly, the broadcast reception apparatus is a mobile terminal having a broadcast receiver to demodulate the broadcast signal and decode the broadcast data according to the broadcast standard so as to output the broadcast data in the form of visual image and audible sound wave. In the following, video-on-demand (VOD) is a service providing a user with a non-real time audio and/or video program.

In the following the broadcast reception apparatus is represented by a mobile terminal equipped with a broadcast reception module and a mobile communication module. The mobile terminal may be any digital broadcast receiver, Code Division Multiple Access (CDMA) phone, Personal Digital Assistant (PDA), Smartphone, 3rd Generation (3G) communication terminal such as Wideband CDMA (WCDMA) and CDMA2000, High Speed Downlink Packet Access (HADPA) terminal, and their equivalents supporting mobile communication and broadcast reception functions.

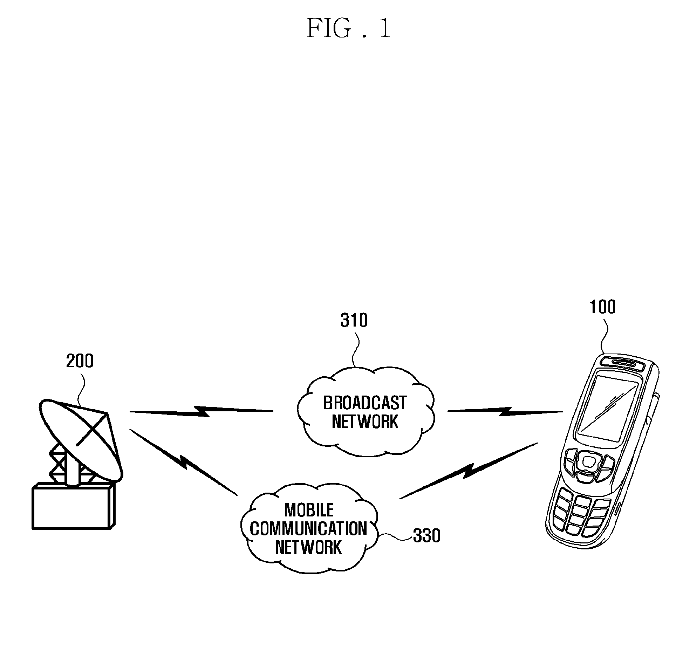

FIG. 1 is a schematic diagram showing a broadcast system according to an exemplary embodiment of the present invention.

In this exemplary embodiment, the broadcast system borrows resources of an existing mobile communication network that has a broader service area than the dedicated broadcast network. That is, the mobile terminal receives the broadcast signal over the mobile communication network when it is out of the service area of the broadcast system.

Referring to FIG. 1, the broadcast system according to an exemplary embodiment of the present invention includes a broadcast station 200, a mobile terminal 100, a broadcast network 310, and a mobile communication network 330.

The broadcast network 310 is a network over which the broadcast signal transmitted by the broadcast station 200 is broadcasted. The broadcast network 310 is configured with a frequency band, a channel allocation scheme, a data rate, and a transmission scheme of a broadcast server. The broadcast network 310 delivers the broadcast signal transmitted by the broadcast station 200. That is, the broadcast network 310 is a one-way communication system transmitting the broadcast signal to the mobile terminal 100 but not receiving any signal from the mobile terminal 100.

The mobile communication network 330 delivers the VOD broadcast data transmitted by a streaming server of the broadcast station 200 to the mobile terminal 100 in response to a request from the mobile terminal 100. The mobile communication network 330 establishes a communication channel between the streaming server of the broadcast station 200 and the mobile terminal 100 via a bidirectional support server such that the signal transmitted by the mobile terminal 100 to the broadcast station 200 may be received by the broadcast station 200. That is, the mobile communication network 330 supports bidirectional communication. The mobile communication network 330 also supports voice and message communication of the mobile terminal 100 as well as the delivery of VOD broadcast data.

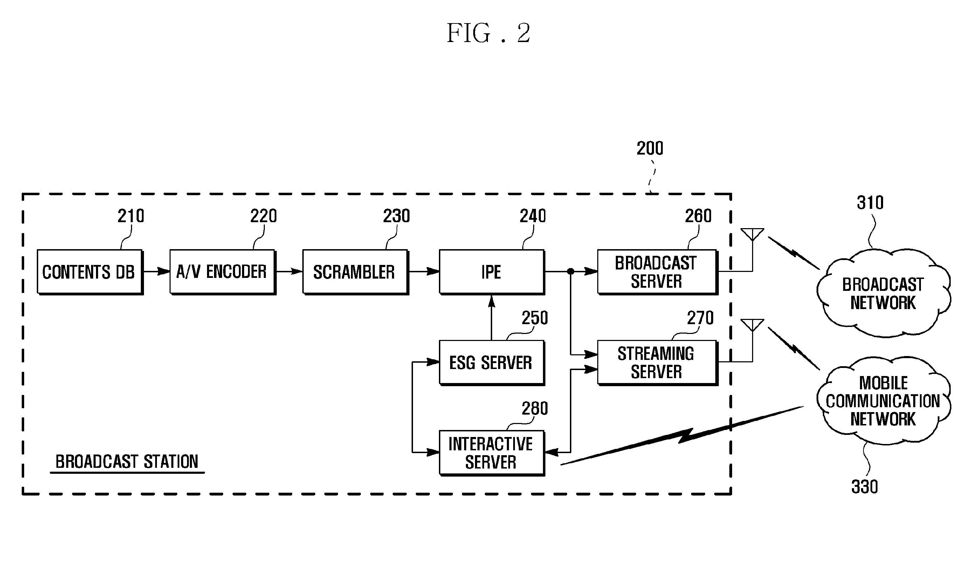

The broadcast station 200 generates broadcast data and transmits the broadcast data to the mobile terminal 100 through the broadcast network 310 and the mobile communication network 330. That is, the broadcast station 200 modulates and encodes the broadcast data to output the broadcast data in the form of the broadcast signal and transmits the broadcast signal to the mobile terminal 100 through the broadcast network 310. The broadcast station 200 also transmits the broadcast data to the mobile terminal 100 in the form of VOD broadcast data. For these purpose, the broadcast station 200 may include two transmission modules, as shown in FIG. 2. In this exemplary embodiment, the broadcast station 200 may be a DVB-H system.

FIG. 2 is a block diagram showing a configuration of the broadcast station of FIG. 1.

Referring to FIG. 2, the broadcast station 200 includes a contents database (DB) 210 to store the broadcast data, an audio/video (A/V) encoder 220, a scrambler 230, an Internet Protocol Encapsulation (IPE) manager 240, an Electronic Service Guide (ESG) server 250, a broadcast server 260, a streaming server 270, and an Interactive server 280.

The contents DB 210 stores the broadcast data, i.e. the audio, video, and text data. The audio, video, and text data are associated broadcast programs that are produced by a contents provider or the broadcast station 200. The contents DB 210 outputs the audio and video data to the A/V encoder 220.

The A/V encoder 220 encodes the audio and video data in synchronization with each other. The A/V encoder 220 outputs the encoded audio and video data to the scrambler 230. Here, the A/V encoder 220 adjusts synchronization between the audio and video data and encodes the data on the basis of a protocol supported by the broadcast station 200 such as Motion Picture Experts Group (MPEG) Series. The A/V encoder 220 also may encode the text data in a subtitle format.

The scrambler 230 scrambles the audio and video data using an algorithm so that the audio and video data are robust to noise. The scrambled data may be descrambled with a specific key value. That is, the scrambler 230 scrambles the audio and video data such that the scrambled data are descrambled by a mobile terminal having the key value. The scrambler 230 outputs the scrambled data to the IPE 240.

The IPE 240 encapsulates the scrambled data into a frame. The frame includes an IP header and ESG information provided by the ESG server 250. The IPE 240 forwards the frame to the broadcast server 260 and the streaming server 270.

The ESG server 250 provides information of the broadcast programs. The ESG server 250 is a DVB-H specific component, which is added to the broadcast station 200. The ESG server 250 provides the IPE 240 with broadcast program information such as program start times, program lengths, program identities, IP and port information, characters' information, program synopses, and advertisement information.

The broadcast server 260 modulates the broadcast data received from the IPE 240 to deliver the broadcast data to the mobile terminal 100 in the form of the broadcast signal over the broadcast network 310. In the case of DVB-H system, the broadcast server 260 transmits the ESG and the broadcast data through separate channels. That is, the ESG is delivered in an IP stream using the File Delivery over Unidirectional Transport (FLUTE) protocol, and the broadcast data is delivered in a format using an MPEG protocol.

The streaming server 270 processes the broadcast data received from the IPE 240 to deliver the broadcast data to the mobile terminal 100 in VOD format over the mobile communication network 330. The streaming server 270 communicates with the mobile terminal 100 via the interactive server 280 and transmits the broadcast signal in the form of VOD service. For example, if the mobile terminal 100 requests a broadcast program after 20 minutes have elapsed from the start of the broadcast program, the streaming server 270 starts transmitting the broadcast signal at a time point that is 20 minutes from the start of the broadcast program.

The interactive server 280 establishes a communication channel between the mobile terminal 100 and the broadcast station 200 over the mobile communication network 330 and receives the VOD request transmitted by the mobile terminal 100 through the mobile communication network 330. That is, the interactive server 280 requests the ESG corresponding to the VOD broadcast data requested by the mobile terminal 100 and requests the broadcast data (including audio and video data) from the streaming server 270. At this time, the interactive server 280 sends the information on the communication channel established with the mobile terminal 100 to the streaming server 270 such that the streaming server 270 performs data communication with the mobile terminal 100 via the mobile communication network 330.

The mobile terminal 100 receives the broadcast data transmitted by the broadcast server 260 through the broadcast network 310 and demodulates and decodes the broadcast data. The decoded broadcast data are processed to be output through a display unit and an audio processing unit of the mobile terminal 100. When the mobile terminal 100 moves out of the broadcast network 310, the mobile terminal 100 requests the broadcast station 200 to transmit the lost broadcast data in the VOD service such that the lost broadcast data is received through the mobile communication network 330.

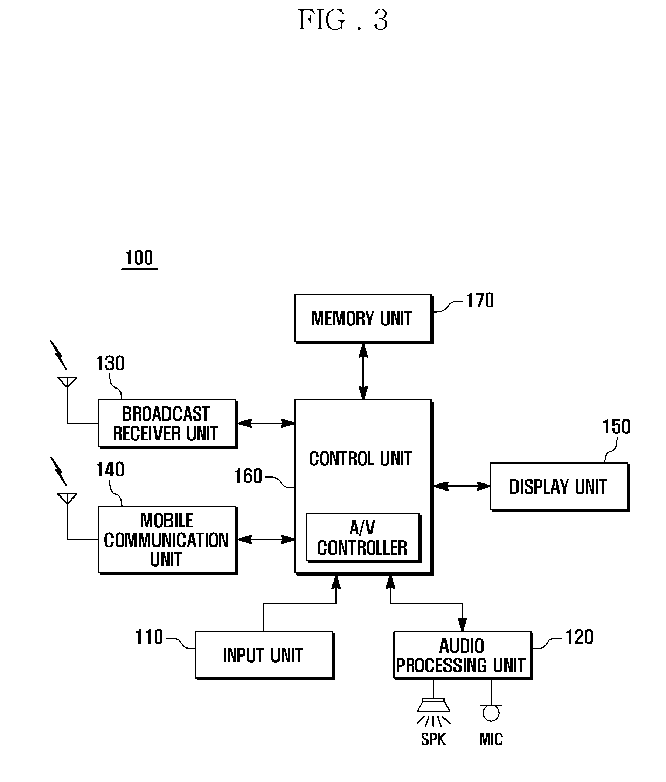

FIG. 3 is a block diagram showing a configuration of a mobile terminal of FIG. 1. As shown in FIG. 3, the mobile terminal 100 includes an input unit 110, an audio processing unit 120, a broadcast receiver unit 130, a mobile communication unit 140, a display unit 150, a control unit 160, and a memory unit 170.

The input unit 110 may include a plurality of alphanumeric keys to input alphanumeric data and function keys to execute various functions of the mobile terminal 100. The function keys may include navigation keys, side keys, and shortcut keys. The input unit 110 transmits key signals input through the keys to the control unit 160. Particularly in this exemplary embodiment, the input unit 110 generates key signals to activate the broadcast receiver unit 130, to activate the mobile communication unit 140 while the broadcast receiver unit 130 operates, and to activate the broadcast receiver unit 130 while the mobile communication unit 140 operates, and transmits the key signals to the control unit 160.

The audio processing unit 120 processes the broadcast data received through the broadcast receiver unit 130 and the mobile communication unit 140 and outputs the processed broadcast data through a speaker (SPK) in the form of audible sound wave. The audio processing unit 120 processes an audio signal input through a microphone (MIC) and outputs the processed audio signal, e.g. voice input in a voice call session, to the control unit 160.

The broadcast receiver unit 130 receives the broadcast signal transmitted by the broadcast station 200 through the broadcast network 310. That is, the broadcast receiver unit 130 establishes a unidirectional communication channel to receive the broadcast signal through the broadcast network 310. The broadcast receiver unit 130 is configured with internal components arranged in a reverse order of the components of the broadcast station 200 to demodulate and decode the received broadcast signal. The broadcast receiver unit 130 outputs the decoded broadcast data to the display unit 150 and audio processing unit 120 under the control of the control unit 160. Particularly in this exemplary embodiment, if the broadcast signal is received in a weak electric field, the broadcast receiver unit 130 reports the signal weakness to the control unit 160. In this case, the broadcast receiver unit 130 enters into a sleep mode to sense the broadcast electric field periodically under the control of the control unit 160. If it is sensed that the electric field is normal, the broadcast receiver unit 130 reports the normal state of the electric field to the control unit 160.

The mobile communication unit 140 is responsible for wireless communication of the mobile terminal 100 and can establish a broadcast channel with the streaming server 270 to receive VOD broadcast data over the mobile communication network 330. That is, the mobile communication unit 140 receives VOD broadcast data and communicates with another terminal over the mobile communication network 330.

The display unit 150 can selectively display the broadcast data and VOD broadcast data as visual images under the control of the control unit 160. The display unit 150 may have a touchscreen function. In this case, the display unit 150 acts as a part of the input unit 110. The user interface provided by the display unit 150 is described in more detail below.

The control unit 160 controls general operations of the mobile terminal 100 and signaling between internal components. The control unit 160 controls the internal components of the mobile terminal 100 such that the broadcast data received through the broadcast receiver unit 130 and the mobile communication unit 140 are continuously played in synchronization with each other. When the mobile terminal 100 is a mobile phone, the control unit 160 incorporates a modem and a codec.

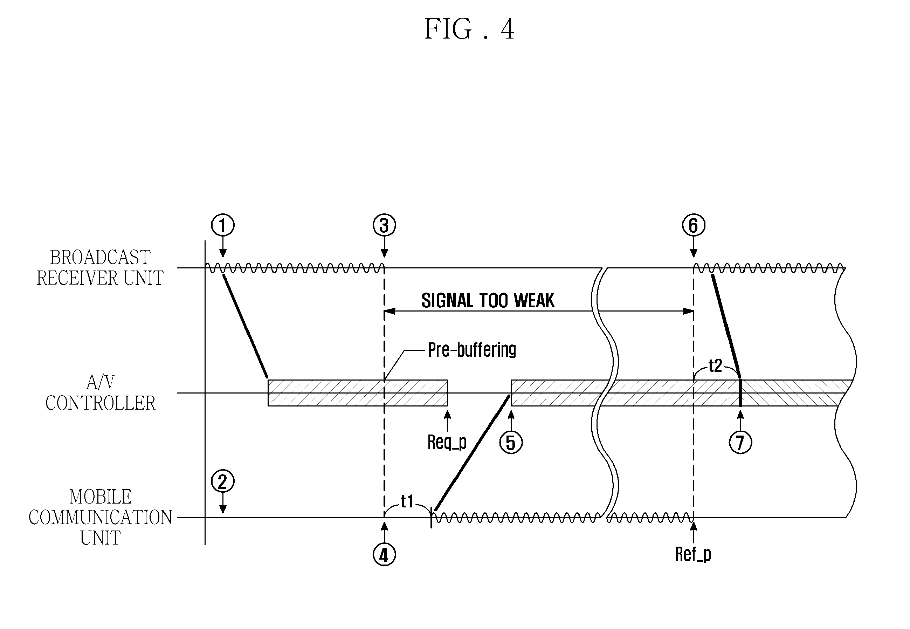

That is, the control unit 160 controls the broadcast receiver unit 130 to receive broadcast data over the dedicated broadcast network 310 and play the received broadcast data. When the broadcast receiver unit 130 does not receive broadcast data over the broadcast network 310, the control unit 160 activates the mobile communication unit 140 to receive broadcast data over the mobile communication network 330 in the form of VOD service. For this purpose, the control unit 160 includes an A/V controller. The A/V controller controls the broadcast receiver unit 130 and the mobile communication unit 140 such that the mobile terminal 100 receives the broadcast data through the broadcast network 310 or mobile communication network 330 according to their availabilities. The operation of the control unit 160 of the mobile terminal 100 is described in more detail below with reference to FIG. 4.

The memory unit 170 stores an operating system and application programs associated with the functions of the mobile terminal 100. Particularly in this exemplary embodiment, the memory unit 170 stores the application programs to manage the operations of the broadcast receiver unit 130 and the mobile communication unit 140, buffer the broadcast data and VOD broadcast data, and load the broadcast data under the control of the control unit 160. The memory unit 170 can be configured to store and/or buffer the broadcast data. That is, the memory unit 170 can store and buffer the broadcast data received by the broadcast receiver unit 130 and the mobile communication unit 140. The memory unit 170 can be divided into a program region and a data region.

The program region stores the operating system (OS) and a broadcast receiver unit management program, a mobile communication unit management program, a broadcast data playback program, a VOD broadcast data playback program, and other application programs for executing various optional functions of the mobile terminal 100 such as camera function, ring tone generation function, and multimedia playback function. Here, the broadcast data playback program and VOD broadcast data playback program may be integrated into a broadcast data player to secure the continuous playback of broadcast data received through the dedicated broadcast network 310 and the mobile communication network 330. The mobile terminal 100 activates the functions in response to the user input under the control of the control unit 160.

The data region stores the application data generated while the mobile terminal 100 operates with the application programs, e.g. still and motion pictures taken by the camera function, phonebook data, and recorded audio data, and user data input by the user. Particularly, the data region stores and buffers the broadcast data received by the broadcast receiver unit 130 and the mobile communication unit 140. The data region also stores the information associated with the reception of the broadcast data such as the program identity and the IP address and port number required to communicate with the interactive server 280 and receive the VOD broadcast data.

As described above, the mobile terminal 100 receives broadcast data transmitted by the broadcast station 200 through the broadcast receiver unit 130 or the mobile communication unit 140 according to the availabilities of the broadcast network 310 and the mobile communication network 330 and plays the broadcast data received through the broadcast network 310 and mobile communication network 330 continuously.

The operations of the above structured broadcast system and mobile terminal are described below.

FIG. 4 is a timing diagram showing an operation of the mobile terminal of FIG. 3.

In this exemplary embodiment, it is assumed that the broadcast receiver unit 130 is a DVB-H module. However, the present invention is not limited thereto. For example, the broadcast receiver unit 130 may be any of a DMB module, MediaFLO module, and other broadcast system-based receiver modules.

Referring to FIG. 4, the control unit 160 of the mobile terminal 100 activates the broadcast receiver unit 130 in response to a command input through the input unit 110 at a first time point (1). That is, the control unit 160 executes a broadcast reception program in response to a broadcast receiver activation signal such that the broadcast receiver unit 130 starts receiving the broadcast signal on a preset frequency band on the basis of the corresponding ESG. Next, the control unit 160 controls the broadcast receiver unit 130 to modulate and decode the broadcast signal and output the decoded broadcast data to the A/V controller. The A/V controller buffers and outputs the buffered broadcast to the display unit 150.

At a second time point (2), the control unit 160 extracts the program identity, IP address, and port number of the streaming server 270 from the received broadcast data. In more detail, the control unit 160 analyzes a Session Description Protocol (SDP) file contained in the broadcast data, extracts the IP address and port number to receive the broadcast data in the form of VOD service from the SDP file, and stores the IP address and port number together with the program identity.

The broadcast receiver unit 130 receives and processes the broadcast signal and outputs the processed broadcast data to the A/V controller while the broadcast network 310 is available. The A/V controller extracts the audio and video data from the broadcast data and outputs the audio and video data to the audio processing unit 120 and display unit 150, respectively.

If it is detected that the mobile terminal 100 has entered into a weak electric field area at a third time point (3), the control unit 160 activates the mobile communication unit 140 at a fourth time point (4). At this time, the A/V controller outputs the audio and video data received in a pre-buffering period and sends a time stamp (Req_P) of the audio and video data to the control unit 160.

Upon receiving the time stamp, the control unit 160 creates a VOD broadcast data request message at a fourth time point (4) on the basis of the program identity, IP address, and port number obtained at the second time point (2) and transmits the VOD broadcast data request message to the broadcast station 200 through the mobile communication unit 140. There may be a delay t1 due to the mobile communication unit 140 activation and VOD broadcast request between the screen images of the broadcast data received by the broadcast receiver unit 130 and mobile communication unit 140.

The screen image of the VOD broadcast data starting at a fifth time point (5) is displayed with reference to the time stamp (Req_P). Accordingly, the screen images of the broadcast data received through the broadcast network 310 and the mobile communication network 330 may continue to display broadcasting seamlessly at the fifth time point (5).

In the meantime, the broadcast receiver unit 130 scans the frequency band of the broadcast network 310 periodically or in response to an input command to check whether the broadcast network 310 is available. If the broadcast receiver unit 130 detects that the broadcast network 310 is again available, it notifies the control unit 160 of the availability of the broadcast network 310 at a sixth time point (6) such that the control unit 160 controls the broadcast receiver unit 130 to receive the broadcast data and controls the mobile communication unit 140 to quit receiving the VOD broadcast data at a reference time point (Ref_P). Accordingly, the audio and video data of the VOD broadcast data are played until a seventh time point (7). From the seventh time point (7), screen image display may be delayed for a duration t2, which may include the receiver module switching time and t1. The broadcast data corresponding to the duration t2 may be received through the mobile communication network 330 and displayed in the form of a Picture-In-Picture (PIP) image or in place of an advertisement by reducing or skipping the advertisement. The screen image associated with the delay time t2 is described below in association with the user interface of the display unit 150.

In FIG. 4, during the time between the first and third time points (1 and 3), the broadcast receiver unit 130 is responsible for receiving broadcast data. However, the broadcast receiver unit 130 does not receive broadcast data in a weak electric field during the time between the third and sixth time points (3 and 6). Accordingly, the mobile communication unit 140 is responsible for receiving broadcast data during the time between the third and sixth time points (3 and 6) in the form of VOD service. The A/V controller plays the broadcast data after buffering starts at the first time point (1). In the same manner, the A/V controller plays the VOD broadcast data after buffering starts at the fifth time point (5).

As described above, the mobile terminal of exemplary embodiments of the present invention may receive the broadcast data and corresponding VOD broadcast data transmitted by the broadcast station and play the interchangeably received broadcast data in a seamless manner.

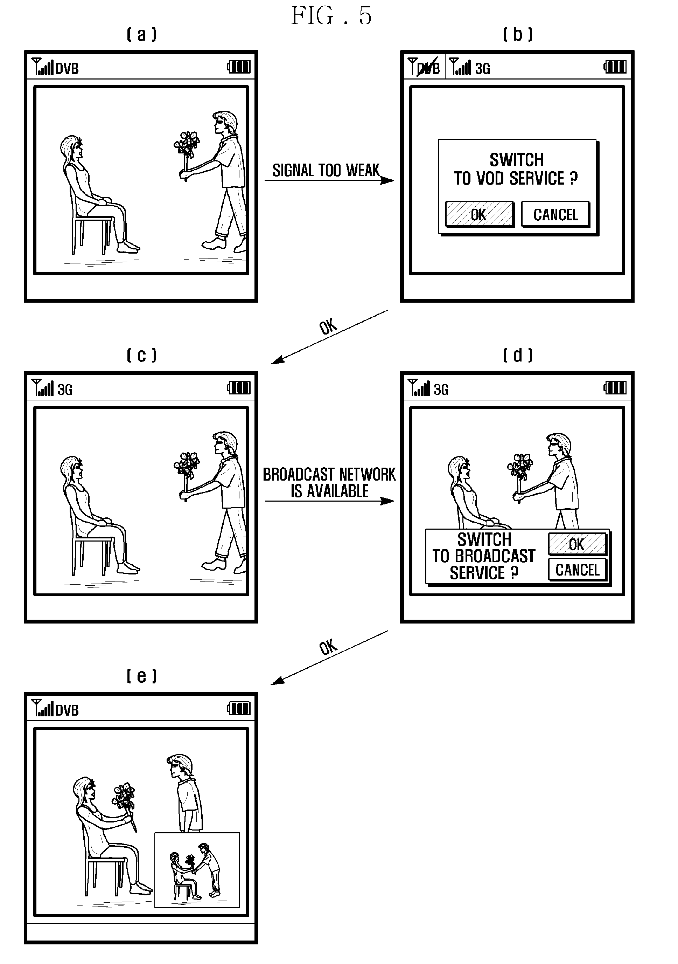

FIG. 5 is a diagram showing steps of a broadcast data display procedure of a broadcast playback method according to an exemplary embodiment of the present invention.

Referring to FIG. 5, the display unit 150 of the mobile terminal 100 displays video data extracted from broadcast data received by the broadcast receiver unit 130 as shown in the screen image (a). The display unit 150 may be configured to display a received signal strength indicator on the screen. Although a broadcast radio signal strength indicator is presented in the screen image (a) of FIG. 5, a mobile communication radio signal strength indicator can be presented together with the broadcast radio signal strength indicator. That is, the display unit 150 can be configured to display the broadcast radio signal strength indicator and the mobile communication radio signal strength indicator simultaneously.

If the broadcast receiver unit 130 detects a weak electric field of the broadcast signal, the display unit 150 displays a popup window asking whether to switch to the VOD service mode as shown in screen image (b) of FIG. 5. At this time, the display unit 150 may present an alert message notifying the user that the broadcast receiver unit 130 cannot receive the broadcast signal. The display of the popup window may be omitted. In this case, the mobile terminal 100 changes the broadcast reception mode by switching from the broadcast receiver unit 130 to the mobile communication unit 140 automatically without popup window notification. In the screen image (b) of FIG. 5, if a switching cancel button is selected, the display unit 150 displays an alert message notifying the user that broadcast playback is unavailable.

If a switching confirm button is selected in the screen image (b) of FIG. 5, the display unit 50 starts displaying the broadcast data received in a VOD service mode as shown in screen image (c) of FIG. 5. When the broadcast receiver unit 130 cannot receive the broadcast data, the mobile communication unit 140 may receive and play the broadcast data in the VOD broadcast service mode without carrying out steps shown in images (a) and (b). The video image presented in the screen image (c) is a continuous image following the video image presented in screen image (a). The continuousness of the video data is acquired with reference to a time stamp of the last broadcast data received by the broadcast receiver unit 130. That is, display unit 150 starts displaying the VOD broadcast data having the next time stamp following that of the last broadcast data received by the broadcast receiver unit 130. The display unit 150 displays the VOD broadcast signal strength indicator. The display unit 150 also may display a disable indicator of the broadcast receiver unit 130 together with the VOD broadcast signal strength indicator.

If the mobile terminal 100 enters a broadcast network area while receiving broadcast data through the mobile communication network 330, the broadcast receiver unit 130 detects the availability of the broadcast network and the display unit 150 presents a popup window asking whether to switch to the dedicated broadcast service mode as shown in screen image (d) of FIG. 5. The popup window may be presented at one side of the screen to allow the user to continue viewing the ongoing video image. The display unit 150 displays the received signal strength indicators of the broadcast receiver unit 130 and the mobile communication unit 140.

If a switching confirm button is selected on the popup window, the display unit 150 starts displaying a video image of the broadcast data received by the broadcast receiver unit 130. At this time, the display unit 150 may display the video image of the VOD broadcast data in the form of PIP during the switching delay time in which broadcast data is not yet received by the broadcast receiver unit 130, as shown in the screen image (e) of FIG. 5. In more detail, the display unit 150 displays the broadcast data (video data) received by the broadcast receiver unit 130 in a full screen view and the VOD broadcast data received by the mobile communication unit 140 in a PIP window. At this time, the video image displayed in the PIP window is followed by the broadcast data of the video image of the broadcast data received by the broadcast receiver unit 130. The PIP video image cannot be displayed under the control of the control unit 160. Such a function can be configured according to an optional setting. That is, the PIP video display process may be omitted. The display unit 150 may also display the video image for the delay time in place of an advertisement image.

It is assumed that a program has a 30-minute playback time followed by a 1 minute advertisement. Also, it is assumed that the program is played for 25 minutes, 30 seconds are delayed, the video data corresponding to the 25^{th}-28^{th} minutes of the playing time are replaced by the VOD broadcast data, and then the program is played again beginning at the 28^{th} minute. In this case, the VOD broadcast data image corresponding to the delayed time is displayed in the PIP window together with the broadcast data beginning at the 28^{th} minute. That is, the display unit 150 displays the VOD broadcast image from the 25^{th} minute to the 28^{th} minute and 30 seconds. The display unit 150 displays the broadcast data image corresponding to the duration between the beginning time point and the 25^{th} minute and the duration between the 25^{th} minute and the 28^{th} minute and 30 seconds.

In the case of ignoring video data display, the video data corresponding to the delayed 30 seconds is not displayed. That is, the display unit 150 displays the broadcast data image corresponding to the first 25 minutes, the VOD broadcast data image corresponding to the duration between 25^{th} minute and the 27^{th} minute and 30 seconds, and the broadcast data image corresponding to the duration between 28^{th} minute and 30^{th} minute.

When replacing the advertisement, however, the broadcast data image corresponding to the 30-second delayed time is displayed in place of the advertisement. That is, the display unit 150 displays the broadcast data image corresponding the first 25 minutes, VOD broadcast data image corresponding to the duration between 25^{th} minute and the 28^{th} minute after the 30 second time delay, and the broadcast data image corresponding to the 28^{th} minute to the 30^{th} minute such that the advertisement is displayed during the last 30 seconds. Thus, 30 seconds of the 1 minute advertisement may be replaced with the broadcast data image corresponding to the 30-second delayed time.

In association with the received signal strength indicators, the received signal strength indicators of the mobile communication unit 140 and the broadcast receiver unit 130 are displayed at fixed positions on the screen individually. The display unit 150 can be configured such that the received signal strength indicator of the currently activated broadcast reception module, i.e. the broadcast receiver unit 130 or the mobile communication unit 140, is displayed at the left side first. The audio data extracted from the broadcast data are output through the audio processing unit 120.

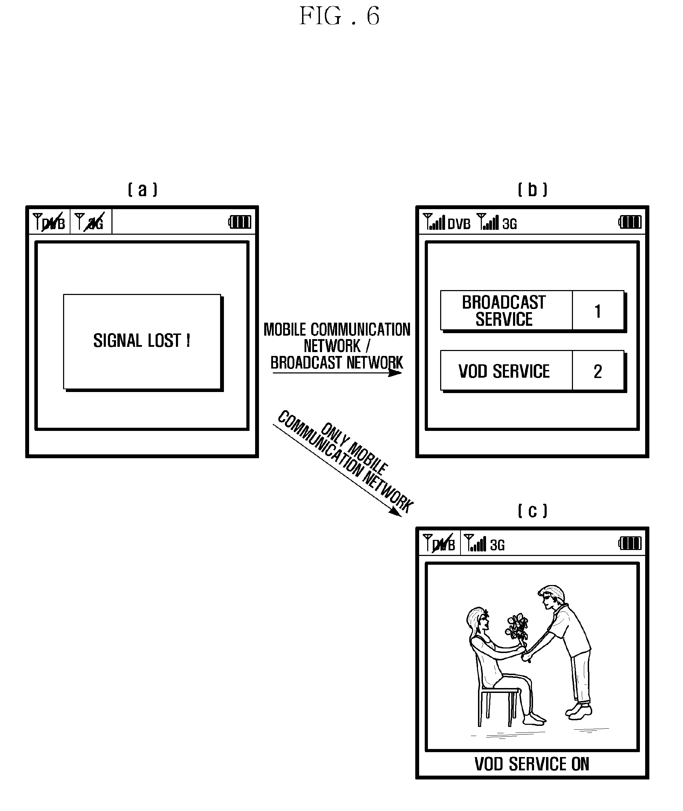

FIG. 6 is a diagram showing steps of a broadcast data display procedure of the broadcast playback method according to another exemplary embodiment of the present invention.

In this exemplary embodiment, it is assumed that the mobile terminal 100 moves out of the coverage areas of both the broadcast network 310 and the mobile communication network 330 while receiving the broadcast data or VOD broadcast data.

Referring to a screen image (a) of FIG. 6, it is indicated that the mobile terminal 100 is outside of the broadcast network coverage area and the mobile communication network coverage area. In this case, the display unit 150 displays the broadcast signal strength indicator and mobile communication signal indicators to indicate that signals are not being received. The display unit 150 also displays a popup window with an alert message indicating that both the broadcast signal and VOD broadcast signal are not receivable.

If the mobile terminal 100 moves into an area that is covered by both the broadcast network 310 and mobile communication network 330, the display unit 150 displays a popup window with an alert message asking the user to select one of the broadcast network 310 and mobile communication network 330 to receive the broadcast data as shown in the screen image (b) of FIG. 6. When selecting the broadcast network 310, the broadcast data received are played regardless of the previously received broadcast data. If the mobile communication network 330 is selected to receive the broadcast in the VOD service, the broadcast data following the previously received broadcast data or VOD broadcast data are received. When broadcast data reception is broken over the broadcast network 310 and restarts over the mobile communication network 330, the mobile terminal 100 may appear to receive the VOD broadcast data continuously. Also, when broadcast data reception is broken over the mobile communication network 330 and restarts over the mobile communication network 330, the mobile terminal may appear to receive the VOD broadcast data continuously. In order to maintain the continuity of the broadcast data, the mobile terminal 100 may save the information regarding the previously received broadcast data such as its program identity, IP address and port number for VOD service, and time stamp when the broadcast reception is lost.

Alternatively, the mobile terminal 100 may move into an area covered by the mobile communication network 330 but not the broadcast network 310. In this case, the mobile terminal 100 may start to automatically receive the broadcast data in the VOD service via the display unit 150, and the display unit 150 may display the video image of the broadcast data as shown in the screen image (c) of FIG. 6. At this time, the network availability may be checked by the received signal strength indicators. In the screen image (c) of FIG. 6, the broadcast signal strength indicator is disabled and the mobile communication strength indicator is enabled. The display unit 150 may be configured to display an alert message notifying the user that the current onscreen image is based on the VOD service. Here, the mobile terminal 100 stores information regarding the previously received broadcast data or VOD broadcast data such as program identity, IP address, port number, and time stamp.

As described above, the broadcast system according to exemplary embodiments of the present invention allows the mobile terminal 100 to receive the broadcast data through different communication networks to maintain the continuity of the broadcast stream.

Now, the broadcast playback method according to an exemplary embodiment of the present invention is described hereinafter.

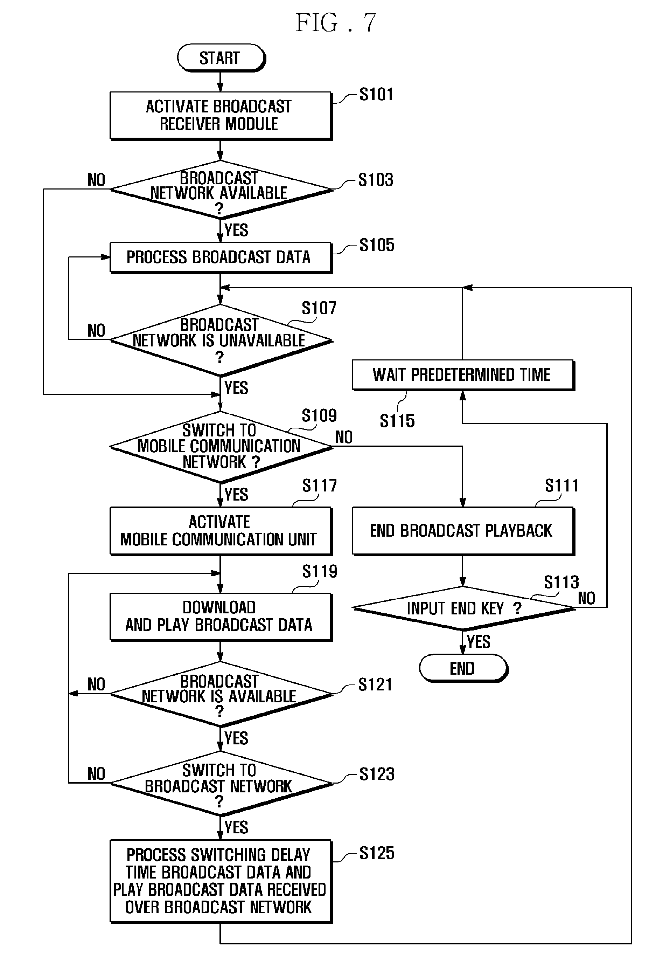

FIG. 7 is a flowchart showing a broadcast playback method according to an exemplary embodiment of the present invention.

Referring to FIG. 7, in the broadcast playback method according to an exemplary embodiment of the present invention, the control unit 160 of the mobile terminal 100 activates the broadcast receiver unit 130 in response to a user command (S101). During the activation of the broadcast receiver unit 130, the control unit 160 configures the mobile terminal 100 to receive the broadcast data with the preset channel setting and ESG. Next, the control unit 160 determines whether the broadcast network 310 is available (S103). The availability of the broadcast network is determined on the basis of the broadcast signal strength received by the broadcast receiver unit 130.

If the broadcast network 310 is available, the control unit 160 processes the broadcast signal received by the broadcast receiver unit 130 (S105). That is, the control unit 160 demodulates and decodes the broadcast signal and outputs the decoded broadcast data to the display unit 150 and the audio processing unit 120.

Next, the control unit 160 determines whether the broadcast network 310 is unavailable (S107). The broadcast network unavailability is determined on the basis of an alarm message sent by the broadcast receiver unit 130. If the broadcast network is available, the control unit 160 continues to receive and process the received broadcast signal.

If it is determined that the broadcast network 310 is unavailable at step S107, the control unit 160 determines whether to switch to the mobile communication network 330 for the VOD service on the basis of a user command (S109). In this exemplary embodiment, the VOD service is a service for providing broadcast data through the mobile communication network 330 according to the user request. Particularly in this exemplary embodiment, the VOD service can provide the broadcast data so that it appears continuous with the last broadcast data received through the broadcast network 310 so as to secure seamless broadcast data playback.

At step S109, if a network switching cancellation command is input, the control unit 160 ends the broadcast playback (S111). Then, the control unit 160 causes a popup window containing an alert message notifying the user that the broadcast network 310 is unavailable to be displayed. Next, the control unit 160 determines whether a broadcast playback termination command is input (S113). If a broadcast playback termination command is input, the control unit 160 deactivates the broadcast receiver unit 130 to end the broadcast playback mode and, otherwise, waits a predetermined time (S115) and repeats step S107.

Returning to step S109, if a network switching command is input, the control unit 160 activates the mobile communication unit 140 (S117). At this time, the control unit 160 controls the mobile communication unit 140 to establish a communication channel with the streaming server 270 of the broadcast station 200 over the mobile communication network 330. The mobile communication unit 140 transmits a VOD request signal to the interactive server 280 of the broadcast station 200 and receives the broadcast data from the streaming server 270 in the form of VOD service.

Next, the control unit 160 downloads the broadcast data through the mobile communication network 330 through the mobile communication unit 140 and plays the downloaded broadcast data. Here, the control unit 160 generates a VOD request message containing the program identity, IP address, and port number to receive the broadcast data, and the time stamp indicating the time when broadcast data was last received. The control unit 160 transmits the VOD request message to the interactive server 280 and receives the broadcast data transmitted through the streaming server 270. Next, the control unit 160 processes the broadcast data received in the VOD service manner and outputs the video and audio data extracted from the broadcast data to the display unit 150 and the audio processing unit 120.

While playing the VOD broadcast data, the control unit 160 judges whether the broadcast network is available either periodically or in response to the user request (S121). At this time, the control unit 160 activates the broadcast receiver unit 130 to check whether the broadcast network 310 is available. If the broadcast network 310 is unavailable, the control unit 160 causes the broadcast receiver unit 130 to enter a sleep mode or deactivates the broadcast receiver unit 130 and then maintains downloading the broadcast signal at step S119.

On the other hand, if it is determined that the broadcast network 310 is available, the control unit 160 determines whether a network switching command is input (S123). The network switching may be performed in accordance with the user setting or configuration of the mobile terminal. That is, the control unit 160 may automatically switch to the broadcast network 310 when the broadcast network 310 is available, or the user may be prompted to determine whether to switch to the broadcast network 310 when the broadcast network 310 is available.

If a network switching command is input at step S123, the control unit 160 processes the broadcast data corresponding to a switching delay time and continues receiving and playing the broadcast data received over the mobile communication network 330 (S125).

In more detail, the control unit 160 processes the broadcast data received through the mobile communication network 330 in the VOD service manner to display the broadcast data in the PIP window during the network switching delay time. The broadcast data corresponding to the switching delay time may be displayed in place of an advertisement or may not be displayed according to the user configuration.

As described above, the broadcast playback method according to an exemplary embodiment of the present invention allows a mobile terminal to perform network switching, when the dedicated broadcast network is unavailable, from the dedicated broadcast network to the mobile communication network to continue receiving broadcast data, resulting in continuity of broadcast playback.

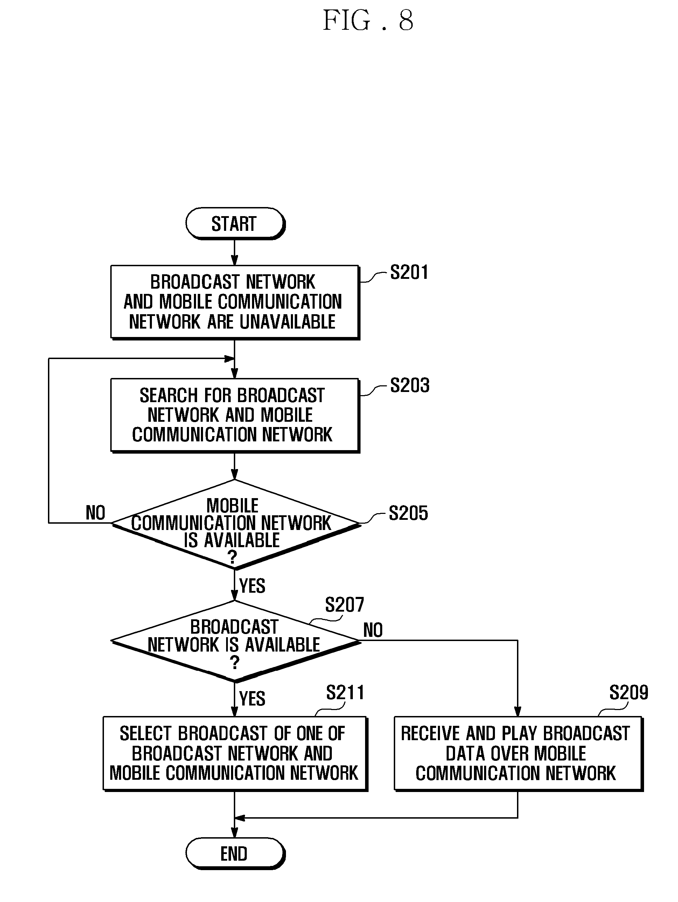

FIG. 8 is a flowchart showing a broadcast playback method according to another exemplary embodiment of the present invention.

Referring to FIG. 8, the mobile terminal 100 determines that it is located an area that is not covered by the dedicated broadcast network 310 or the mobile communication network 330 (S201). The control unit 160 of the mobile terminal 100 scans frequency bands to discover the broadcast network 310 and mobile communication network 330 periodically or in response to a user command (S203).

While scanning the frequency bands, the control unit 160 determines whether a mobile communication network 330 is available on the basis of the signal strength measured in the scanning process (S205). If it is determined that the mobile communication network 330 is unavailable, the control unit 160 maintains periodic and user command-based scanning. Since the mobile communication network 330 is assumed to have a larger coverage area than that of the broadcast network 310, it is assumed that the broadcast network 310 is unavailable in areas where the mobile communication network is unavailable. Accordingly, the frequency band scanning may be performed first with the mobile communication network 330 and then with the broadcast network 310. If it is determined that the mobile communication network 330 is available at step S205, the control unit 160 determines whether the broadcast network 310 is also available (S207).

If it is determined that the broadcast network 310 is unavailable, the control unit 160 receives the broadcast data through the mobile communication network 330 in the form of a VOD service (S209). At this time, the control unit 160 checks whether a record on the previously played broadcast data exists. If no record on the previously played broadcast data exists, the control unit 160 plays the currently received broadcast data. On the other hand, if a record on the previously played broadcast data exist, the control unit 160 generates a VOD request message containing the information associated with the previously played broadcast data such as the program identity, IP address, port number, and time stamp of the last received broadcast data, and transmits the VOD request message to the broadcast station 200.

If it is determined, at step S207, that the broadcast network 310 is available, the control unit 160 causes a popup window allowing the user to select one of the broadcast network 310 and the mobile communication network 330 to be displayed on the screen (S211). Consequently, the mobile terminal 100 receives the broadcast data through one of the broadcast network 310 and the mobile communication network 330 as selected by the user. If the broadcast network 310 is selected, the control unit 160 plays the currently received broadcast data regardless of the previously received broadcast data. On the other hand, if the mobile communication network 330 is selected, the control unit 160 plays the broadcast data as processed at step S209.

As described above, when the mobile terminal 100 moves out of the shadow area and enters an area covered by the broadcast network 310 and/or the mobile communication network 330, the control unit 160 controls the reception of the broadcast data in response to the user's network selection.

Although the mobile terminal 100 is configured to receive the broadcast signal through a mobile communication network 330 in the form of a VOD service whenever the broadcast receiver unit 130 cannot receive the broadcast signal in the above exemplary embodiments, the present invention is not limited thereto. For example, the mobile terminal 100 may be configured such that, when mobile terminal 100 is located in an area where the electric field strength of the broadcast network 310 changes frequently, the mobile communication network 330 may be selected as a primary network for a specific duration to receive the broadcast data. The duration is determined in consideration of the user requirements and locations.

Although the broadcast playback method and the mobile terminal operate, in the above exemplary embodiments, such that, when the mobile terminal performs the network change from the dedicated broadcast network to the mobile communication network, the broadcast data following the last received broadcast data over the broadcast network is received, the present invention is not limited thereto. For example, the broadcast playback method and the mobile terminal of exemplary embodiments of the present invention may be configured to receive the broadcast from its start point.

As described above, the broadcast playback method and system of exemplary embodiments of the present invention may deliver broadcast data to the mobile terminal over a dedicated broadcast network and an existing mobile communication network such that a mobile terminal may receive broadcast data transmitted by a broadcast station through the broadcast network and mobile communication network according to the radio environment and the user's preference, which may improve broadcast service reliability and guarantee broadcast data reception continuity.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A broadcast playback method, comprising:
receiving a first format of a broadcast stream transmitted by a broadcast station over a first radio network;
playing the first format of the broadcast stream through a demodulation process and a decoding process;
receiving a second format of the broadcast stream over a second radio network when the first radio network is unavailable; and
playing the second format of the broadcast stream.

2. The broadcast playback method of claim 1, wherein the second format of the broadcast stream is received in continuation of the first format of the broadcast stream.

3. The broadcast playback method of claim 1, wherein receiving the second format of the broadcast stream comprises:
creating a request message containing a stream identity, an internet protocol (IP) address, and a port number to receive the second format of the broadcast stream, and a time stamp of the first format of the broadcast stream last received over the first radio network;
transmitting the request message to the broadcast station; and
receiving the second format of the broadcast stream in response to the request message.

4. The broadcast playback method of claim 1, further comprising:
determining whether the first radio network is available while playing the second format of the broadcast stream;
determining whether an input command to play the first format of the broadcast stream is detected when the first radio network is determined to be available; and
playing the first format of the broadcast stream received through the first radio network when the input command is detected.

5. The broadcast playback method of claim 4, wherein playing the first format of the broadcast stream in response to the input command comprises:
displaying the second format of the broadcast stream, received during a network switching delay time, in a Picture-In-Picture (PIP) window,
deleting the second format of the broadcast stream received during a network switching delay time, or
playing the second format of the broadcast stream received during the network switching delay time in place of an advertisement.

6. The broadcast playback method of claim 1, further comprising:
selecting one of the first radio network and the second radio network when the first radio network and the second radio network first become available; and
playing the broadcast stream received through the selected radio network.

7. The broadcast playback method of claim 6, wherein playing the broadcast stream received through the selected radio network comprises:
requesting the second format of the broadcast stream in continuation with the first format of the broadcast stream received through the first radio network when a record associated with the playback of the first format of the broadcast stream exists;
requesting the first format of the broadcast stream in continuation with the second format of the broadcast stream received through the second radio network when a record associated with the playback of the second format of the broadcast stream exists; and
receiving and playing the second format of the broadcast stream received in response to the request.

8. The broadcast playback method of claim 7, wherein requesting the second format of the broadcast stream comprises:
creating a request message containing a stream identity, an internet protocol (IP) address, and a port number to receive the second format of the broadcast stream, and a time stamp of the first format of the broadcast stream when it was last received over the first radio network; and
transmitting the request message to the broadcast station.

9. A broadcast playback apparatus, comprising:
a radio unit to receive a first format of a broadcast stream over a first radio network and to reproduce broadcast data by demodulating and decoding the first format, and to receive a second format of the broadcast stream over a second radio network when the first radio network is unavailable and to reproduce the broadcast data by demodulating and decoding the second format; and
a control unit to control reception of the first format of the broadcast stream and the second format of the broadcast stream and reproduction of the broadcast data.

10. The broadcast playback apparatus of claim 9, wherein the second format of the broadcast stream is received in continuation of the first format of the broadcast stream.

11. The broadcast playback apparatus of claim 10, wherein the control unit creates a request message containing a stream identity, an internet protocol (IP) address, and a port number to receive the second format of the broadcast stream, and a time stamp from when the first format of the broadcast stream was last received over the first radio network, transmits the request message to the broadcast station, and receives the second format of the broadcast stream in response to the request message.

12. The broadcast playback apparatus of claim 9, wherein the control unit determines whether the first radio network is available while playing the second format of the broadcast stream; determines whether an input command to play the first format of the broadcast stream is detected when the first radio network is available; and plays the first format of the broadcast stream received through the first radio network when the input command is detected.

13. The broadcast playback apparatus of claim 12, wherein the control unit causes the second format of the broadcast stream received during a network switching delay time to be displayed in a Picture-In-Picture (PIP) window.

14. The broadcast playback apparatus of claim 12, wherein the control unit deletes the second format of the broadcast stream received during a network switching delay time or causes the second format of the broadcast stream received during the network switching delay time to be displayed in place of an advertisement.

15. A broadcast system, comprising:
a transmitter to transmit broadcast data in a first format and a second format;
at least one receiver to receive the broadcast data in at least one of the first format and the second format;
a first radio network to deliver the broadcast data to the receiver in the first format; and
a second radio network to deliver the broadcast data to the receiver in the second format.
